**Europäisches Patentamt**

**European Patent Office**

**Office européen des brevets**

(19)

(11) **EP 1 189 149 A1**

(12) **EUROPÄISCHE PATENTANMELDUNG**

(43) Veröffentlichungstag:
 **20.03.2002 Patentblatt 2002/12**

(51) Int Cl.⁷: **G06F 17/30**, H04L 29/06

(21) Anmeldenummer: **00120487.4**

(22) Anmeldetag: **19.09.2000**

(84) Benannte Vertragsstaaten:
 **AT BE CH CY DE DK ES FI FR GB GR IE IT LI LU MC NL PT SE**
 Benannte Erstreckungsstaaten:
 **AL LT LV MK RO SI**

(71) Anmelder: **SIEMENS AKTIENGESELLSCHAFT**
 **80333 München (DE)**

(72) Erfinder:
 • **Kloecker, Michael**
  **81373 München (DE)**
 • **Straulino, Heiko**
  **82152 Planegg-Martinsried (DE)**

(54) **Verfahren und Anordnung zur Modifikation einer Webpage**

(57)   Bei einem Client CL, in dem eine Webpage $WP_{CL}$ mit zumindest einer zugeordneten Modifikationsschnittstelle ($MS_{CL}$), sowie zumindest ein Applet $AP_{CL}$ vorgesehen sind, wobei zwischen dem Applet $AP_{CL}$ und zumindest einem Server SV zumindest eine Verbindung VB besteht, wird von dem Server SV zumindest eine erste Nachricht UD zu dem Applet $AP_{CL}$ gesendet, vom dem Applet $AP_{CL}$ hierauf der Modifikationsschnittstelle ($MS_{CL}$) eine zweite Nachricht EV mitgeteilt und die Webpage $WP_{CL}$ unter Berücksichtigung der zweiten Nachricht EV modifiziert. Hierdurch wird ein Server Push Mechanismus realisiert, bei dem die Webpages vorteilhaft lediglich in HTML realisiert werden. Ein aufwändige Realisierung der Webpage WP in einer Programmiersprache wie z.B. Java ist somit nicht erforderlich.

FIG 1

**Beschreibung**

Webpages sind Dateien, die im World Wide Web (WWW) mit Hilfe des Hypertext Transfer Protocol (HTTP) von HTTP Servern - auch 'Web Server' genannt - zu HTTP-Clients - auch 'Browser' genannt - übermittelt und von diesen üblicherweise dargestellt werden.

HTTP ist hierbei eine Menge von Regeln zum Austausch von Text-, Bild-, Klang-, Video- und/oder andere Multimediadateien im WWW. In Relation zur TCP/IP Protokoll-Suite stellt HTTP ein Anwendungsprotokoll (application protocol) im Sinne des ISO OSI Referenzmodells dar. Der Informationsaustausch erfolgt bei TCP/IP mit Hilfe von sog. Flows, durch die Sender und Empfänger (z.B. Web Server und Browser) trotz des verbindungslosen Charakters von TCP/IP auf logisch abstrakter Ebene miteinander verbunden werden, d.h. logisch abstrahiert können Flows auch als Verbindungen bezeichnet werden.

Ein wesentliches Konzept von HTTP besteht darin, dass Dateien Referenzen auf andere Dateien enthalten können. Durch deren Auswahl werden zusätzliche Übermittlungsanforderungen - auch 'Requests' genannt - ausgelöst. Jeder Web Server enthält hierzu neben den Webpages einen HTTP Dämon. Dies ist ein Programm, das dauerhaft auf HTTP Requests wartet und diese bearbeitet, wenn sie eintreffen. Jeder Browser ist z.B. ein HTTP Client, der Requests an Web Server sendet. Wenn ein Nutzer des Browsers einen Request eingibt, indem er entweder einen Uniform Resource Locator (URL) eintippt oder einen Hypertext Link selektiert, dann erzeugt der Browser einen HTTP Request und sendet diesen mit Hilfe von TCP/IP an die Internet-Adresse, die dem eingegebenen URL entspricht. Der HTTP Dämon im adressierten HTTP Server empfängt diesen Request, bearbeitet ihn und sendet die angeforderte(n) Datei (en) zurück - diese Antwort auf einen Request wird auch 'Response' genannt.

Eine spezielle Ausprägung des Webpages sind die sog. HTML Dateien - auch 'HTML pages' genannt. Diese enthalten neben der eigentlichen Information (z.B. Text und/oder Bilder) zusätzliche Anweisungen, die in der Hypertext Markup Language (HTML) verfasst ist. HTML ist ein vom World Wide Web Consortium (W3C) empfohlener internationaler Standard, der von den zur Zeit am meisten verbreiteten Browsern - Microsofts Internet Explorer and Netscapes Navigator - beachtet wird. HTML besteht aus einer Menge von Markup-Symbolen - auch 'Codes' genannt -, die dazu dienen, eine bestimmte Darstellung der Informationen durch den Browser zu bewirken. Ein einzelnes Markup-Symbol wird auch als 'Element' oder als 'Tag' bezeichnet. Die aktuelle Version von HTML ist HTML 4.0. Bedeutende Leistungsmerkmale von HTML 4.0 werden zuweilen auch verallgemeinert als 'Dynamic HTML' bezeichnet.

Jeder Browser unterstützt neben den standadisierten Codes jeweils zusätzliche proprietäre Erweiterungs-Codes. Als Beispiel hierfür seien die sog. 'Skripts' genannt, die z.B. bei Netscape 'JavaScript', bei Mircosoft 'Visual Basic Script (VB-Script)', bei Sun 'Tool Command Language' und bei IBM 'Restructured Extended Executor' genannt werden. Skripts seien im weiteren ohne Einschränkung der Allgemeinheit am Beispiel von JavaScripts beschrieben.

JavaScript ist eine interpretierte Programmier- bzw. SkriptSprache, die von Netscape entwickelt wurde. Sie wird zur Zeit sowohl von Microsofts Internet Explorer, als auch von Netscapes Navigator weitgehend unterstützt. Grundsätzlich ist eine Skriptsprache leichter zu verstehen und schneller zu codieren als eine Compilersprache wie z.B. C, C++ oder Java. Eine Skriptsprache ist bei Ausführung jedoch deutlich langsamer als eine Compilersprache. Skripts werden deshalb häufig in relativ kurzen Programmen eingesetzt. JavaScript wird z.B. in Webpages eingesetzt, um die Darstellung von Informationen im Browser zu ändern, während die Maus über sie bewegt wird. JavaScript Programmteile können innerhalb von HTML pages plaziert werden. Sie werden üblicherweise vom Browser interpretiert. Javascript Programmteile können auch auf Web Servern zum Ablauf kommen wie z.B. in Microsofts Active Server Pages, bevor eine Seite zum anfordernden Client gesendet wird.

JavaScript verwendet zwar einige der Ideen, die auch in der Compilersprache Java gefunden werden können. Ansonsten sind JavaScript als interpretierte Sprache und Java als compilierte Sprache trotz des ähnlichen Namens grundsätzlich sehr unterschiedlich und sollten nicht miteinander verwechselt werden.

Java ist im Unterschied zu JavaScript eine objektorientierte, compilierte Programmiersprache, die ausdrücklich zur Verwendung in der verteilten Umgebung des Internet entwickelt wurde. Sie wurde 1995 von Sun Microsystems vorgestellt und seitdem stetig weiterentwickelt.

Java Programme werden in einen sog. 'Java Bytecode' compiliert, der von jedem Computer ausgeführt werden kann, auf dem eine Java Virtual Machine (JVM) installiert ist. Die JVM interpretiert den Java Bytecode, d.h. übersetzt den Bytecode in Maschinenbefehle, die von der realen Hardware ausgeführt werden können. Individuelle Charakteristika der Computer Hardware Platform wie z.B. die Länge der Maschinenbefehle werden hierbei von der jeweiligen lokalen JVM bei der Ausführung des Java Bytecode angepasst (optional kann der Java Bytecode von der JVM auch mit Hilfe eines just-in-time (JIT) Compilers dynamisch in lokal ausführbaren Code übersetzt werden, wobei Dynamic JIT Compilation in vielen Fällen schneller ist als schrittweise Interpretation der einzelnen Instruktionen eines Java Bytecode). Ein Java Programm kann somit auf jeder beliebigen Hardware Platform zum Ablauf kommen. Zur Zeit ist sowohl in Microsofts Internet Explorer, als auch in Netscapes Navigator eine JVM vorgesehen. Zudem hat zur Zeit beinahe jeder Hersteller von Betriebssystemen einen Java Compiler in ihrem Produktspektrum.

Mit Java können zum einen komplexe Anwendungen entwickelt werden, die entweder auf einem Computer oder verteilt auf Server und Clients in einem Computernetz zum Ablauf kommen. Zum anderen können mit Java auch kleine Anwendungsmodule, z.B. Applets als Teil einer Webpage, entwickelt werden.

Ein Applet ist ein kleines Programm, das zusammen mit einer Webpage an einen Client übermittelt werden kann. Ein in Java geschriebenes Applet wird auch 'Java Applet' genannt. Mit Hilfe von Java Applets können interaktive Animationen - z.B. Interaktionen mit dem Webpage Verwender - oder unmittelbare Berechnungen bewirkt werden, ohne dass hierbei weitere Requests zum Server gesendet werden müssen. Java Applets werden von einer eingeschränkten JVM interpretiert, in der systemkritische Befehle nicht zugelassen sind. Insbesondere enthalten die Java Objekte eines Java Applets grundsätzlich keine Referenzen auf externe Daten oder andere Objekte. Somit kann eine Instruktion keine Adresse enthalten, die auf Datenbereiche anderer Applikationen oder des Betriebssystems verweisen. Java Applets haben den Vorteil, dass sie wegen ihres Ablaufs im Client selbst besonders schnell bearbeitet werden können. Applets können auch in Web Servern zum Ablauf kommen und werden dann als 'Servlets' bezeichnet.

Entsprechend den bisher beschriebenen Konzepten werden Requests stets vom Client initiiert. Hierbei wird bei jedem Request die vollständige Webpage übermittelt. Für das Erstellen von Webpages für komplexe Web Applikationen ist dieses Modell nur bedingt geeignet. Oft ist es erforderlich, dass die im Browser dargestellten Informationen auf Initiative des Servers aktualisiert werden. Beispielsweise ist für eine Finanzapplikation eine Webpage erforderlich, bei der im Browser die dargestellten Börsenkurse und/oder Aktiendepotwerte zyklisch aktualisiert werden.

Bekannt ist hierzu ein automatisiertes, periodisches Pollen des Servers, initiiert durch den Browser. Dazu wird ein spezieller HTML Tag eingesetzt, von dem der Browser dazu veranlasst wird, automatisch nach einer gewissen Zeit einen neuen Request an den Server zu senden. Ein derartiger Tag sieht beispielsweise wie folgt aus:

    <META HTTP-EQUIV="Refresh" CONTENT="12; URL=http://xyz">

Durch diesen Tag wird der Browser angewiesen, nach 12 Sekunden die URL http://xyz erneut anzufordern. Hierdurch wird eine hohe Server und Netzlast erzeugt, da die Webpages auch dann angefordert werden, wenn keine Änderung stattfand.

In einem alternativen Verfahren wird vom Server in der Antwort auf einen HTTP Request ein spezieller Content Typ "multipart/x-mixed-replaced" angegeben. Hierdurch wird der Browser veranlasst, die Verbindung zum Server aufrecht zu erhalten. Von dem Server kann daraufhin jederzeit über die bestehende Verbindung eine neue Webpage geschickt werden. Hierbei muss immer die komplette Webpage übermittelt werden, wodurch eine unnötig hohe Netzlast erzeugt wird. Zudem kann nur die komplette Webpage aktualisiert werden, was einer ansprechenden Darstellung der Webpage entgegensteht.

Ein weiteres Verfahren stellen die von Netscape und Microsoft realisierten Channels dar. Browser registrieren sich bei einem Channel und empfangen daraufhin alle über die Channels verteilten Inhalte. Wegen der Broadcast Architektur dieses Verfahrens können jedoch auf einen Benutzer personalisierte Informationen wie z.B. der aktuelle Wert eines Aktiendepots nicht übermittelt werden.

Weiterhin können Benutzeroberflächen vollständig durch Java Applets realisiert und dargestellt werden. Hierbei werden applikationsspezifische Oberflächen und Kommunikationsprotokolle zwischen Browser und Server realisiert. Dies ist im Vergleich zur Erstellung von Benutzeroberflächen mit HTML deutlich aufwändiger, denn hierzu sind wegen der Komplexität von Benutzeroberflächen besonders gute Kenntnisse der Programmiersprache Java erforderlich. Die Programmierung einer Benutzeroberflächen in Java ist erheblich schwerer zu lernen und durchzuführen als in dem vergleichsweise einfach gestalteten HTML.

Eine Aufgabe der Erfindung liegt darin, ein verbessertes Konzept zur Modifikation von Webpages zu finden. Die Aufgabe wird durch die Merkmale des Patentanspruchs 1 gelöst.

Ein wesentlicher Aspekt der Erfindung besteht darin, dass bei einem Client, in dem eine Webpage mit zumindest einer zugeordneten Modifikationsschnittstelle, sowie zumindest ein Applet vorgesehen sind, wobei zwischen dem Applet und zumindest einem Server zumindest eine Verbindung besteht, von dem Server dem Applet zur Modifikation der Webpage in der Verbindung zumindest eine erste Nachricht mitgeteilt, vom dem Applet der Modifikationsschnittstelle hierauf zumindest eine zweite Nachricht mitgeteilt und die Webpage unter Berücksichtigung der zweiten Nachricht modifiziert wird.

Einige wesentliche Vorteile der Erfindung seien im folgenden genannt:

- Informationen, die im Browser dargestellt werden, können auf Initiative des Servers hin aktualisiert werden - dieses Verfahren sei im weiteren auch "Server Push" genannt.
- Es sind keine erfindungsspezifischen Änderungen am Client Computer oder Browser (z.B. Installation von Anwendungen oder Erweiterungen am Browser) erforderlich. Erfindungsgemäß entwickelte Webpages können somit mit jedem Browser modifiziert werden, von dem Applets und Modifikationsschnittstellen - z.B. in Form von dynamic HTML - unterstützt werden.
- Die Realisierung der Webpage kann in HTML erfolgen, was weniger zeitaufwendig und komplex ist als eine Realisierung in einer Programmiersprache wie z.B. Java.
- Applet, Modifikationsschnittstelle und Server Push werden generisch eingesetzt und können somit ohne Modifikation für beliebige Webpages genutzt werden. Von Webpage-Entwicklern muss keine Anpassung des Applets sowie dessen Verwendung der Modifikationsschnittstelle durchgeführt werden.

Nach einer Ausgestaltung des erfindungsgemäßen Verfahrens ist die Modifikationsschnittstelle als Skript ausgebildet - Anspruch 4. Skripts werden als Teil von dynamic HTML bereits heute von beinahe jedem Browser unterstützt. Somit kann das erfindungsgemäße Verfahren ohne Änderung der bestehenden Browser realisiert werden. Bei entsprechender Definition einer Modifikationsschnittstelle - z.B. als integraler Bestandteil von HTML Webpages - könnte natürlich zukünftig auch der Umweg über ein Skript entfallen.

Gemäß einer Ausgestaltung des erfindungsgemäßen Verfahrens ist vorgesehen, dass das Applet mit einer dem Server bekannten Session-ID gekennzeichnet wird - Anspruch 6. Hierdurch kann ein Web Server mehrere simultan zugreifende Browser differenzieren.

Nach einer Variante des erfindungsgemäßen Verfahrens wird die Adresse des Servers dem Applet als Parameter übergeben oder aus dem Programmcode des Applets bestimmt - Anspruch 7. Dies sind zwei Ausgestaltungen, bei denen von dem Applet die für den Aufbau der Verbindung zu dem Web Server erforderliche Adresse des Web Servers sehr effizient ermittelt wird.

Entsprechend einer Weiterbildung des erfindungsgemäßen Verfahrens ist vorgesehen, dass bei einer Webpage, in der zumindest ein modifizierbarer Bereich durch eine Tag-ID gekennzeichnet ist, in den beiden Nachrichten zumindest die Tag-ID übermittelt wird, wenn lediglich der Bereich modifiziert werden soll - Anspruch 8. Somit kann vorteilhaft ein beliebiger Ausschnitt der im Browser dargestellten Seite aktualisiert werden. Ein Reload der kompletten Seite entfällt. Für die Übermittlung des Updates sind vorteilhaft weniger Netzresourcen erforderlich als für die Übermittlung der kompletten Seite.

Weitere vorteilhafte Ausgestaltungen der Erfindung ergeben sich aus den unter- oder nebengeordneten Ansprüchen.

Die Erfindung wird im folgenden anhand von Ausführungsbeispielen, die in einer Figuren dargestellt sind, näher erläutert. Es zeigt hierbei:

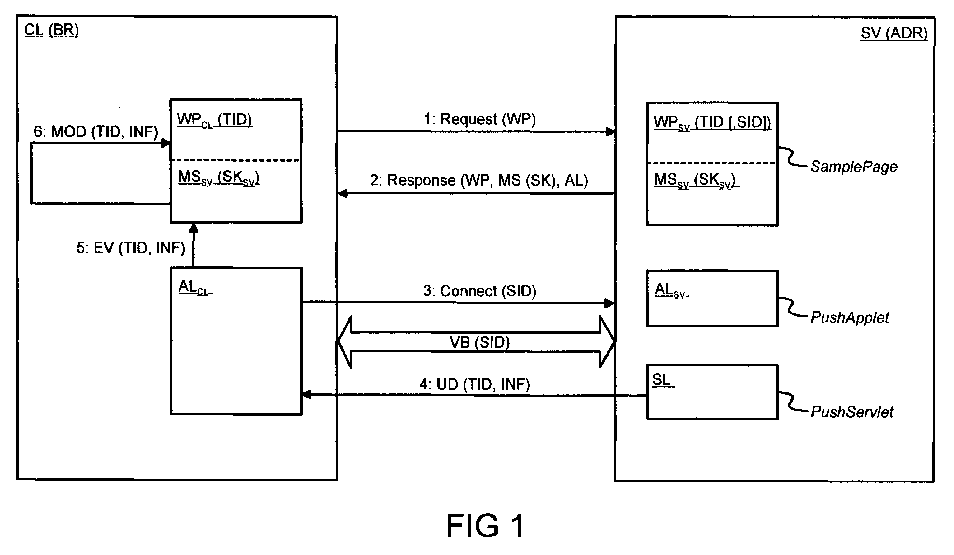

Figur 1 eine erfindungsgemäße Anordnung zur Ausführung des erfindungsgemäßen Verfahrens

In dieser Figur sind beispielhaft zwei erfindungsgemäße Einrichtungen, ein Server SV und ein Client CL, dargestellt. In beiden Einrichtungen CL, SV sind je eine erfindungsgemäße Webpage WP mit zugeordneter erfindungsgemäßer Modifikationsschnittstelle MS, sowie ein erfindungsgemäßes Applet AP vorgesehen. Durch einen entsprechenden Index CL bzw. SV wird hierbei die Zuordnung zur jeweiligen Einrichtung CL, SV angezeigt. Der Client CL ist z.B. als Browser BR, die Modifikationsschnittstelle MS z.B. als Skript SK ausgebildet. In dem Server SV ist zudem ein erfindungsgemäßes Servlet SL vorgesehen.

Zwischen Client CL und Server SV besteht eine Verbindung VB, die optional durch eine Session-ID SID gekennzeichnet ist. Der Begriff "Verbindung" ist hierbei nicht dahingehend einschränkend zu verstehen, dass lediglich verbindungsorientierte Verbindungstechniken wie z.B. ATM oder Festnetzwählverbindungen gemeint wären. Vielmehr ist für einen einschlägigen Fachmann offensichtlich, dass beliebige Verbindungstechniken, d.h. insbesondere auch verbindungslose Verbindungstechniken wie z.B. TCP/IP eingesetzt werden können.

Weiterhin sind folgende Nachrichten dargestellt:

- 1: Request (WP): vom Browser BR zum Server SV zur Anforderung einer Übermittlung der Webpage $WP_{SV}$.
- 2: Response (WP, MS (SK), AL): vom Server SV zum Browser BR zur Übermittlung der Webpage $WP_{SV}$, der z.B. als Skripts $SK_{SV}$ ausgebildeten Modifikationsschnittstelle $MS_{SV}$ und des Applets $AP_{SV}$.
- 3: Connect (SID): vom Applet $AP_{CL}$ zum Server SV zum Aufbau der Verbindung VB.
- 4: UD (TID, INF): vom Servlet SL zum Applet $AL_{CL}$ zur Übermittlung einer Information INF zur Modifikation der Webpage $WP_{CL}$ sowie optional einer Tag-ID TID zur Identifikation der zu modifizierenden Information INF in der $WP_{CL}$. Diese Nachricht wird auch 'Update' genannt.
- 5: EV (TID, INF): vom Applet $AL_{CL}$ an die Modifikationsschnittstelle $MS_{CL}$ zur Weiterleitung der Information INF und der Tag-ID TID. Diese Nachricht wird auch 'Event' genannt.

Schließlich ist die Aktion 6: MOD (TID, INF) zur Modifikation der Webpage $WP_{CL}$ dargestellt.

Der Code der Webpage WP mit zugeordneter Modifikationsschnittstelle MS sei beispielsweise in einer Datei "SamplePage", der des Applets AL in einer Datei "PushApplet" und der des Servlets SL in einer Datei "PushServlet" gespeichert.

Für ein Ausführungsbeispiel der Erfindung ist im folgenden eine exemplarische Implementierung der erfindungsgemäßen Komponenten Webpage WP, Modifikationsschnittstelle MS, Applet AL und Servlet SL aufgezeigt. Die Modifikationsschnittstelle MS ist beispielsweise als Skript SK ausgebildet. Die Webpage WP ist in HTML, das Skript SK in JavaScript und das Applets AL sowie das Servlets SL sind in Java codiert. Erfindungswesentliche Elemente sind zum erleichterten Verständnis der Codes durch vorangestellte Kommentare gekennzeichnet.

Die konkretisierende Ausbildung der Modifikationsschnittstelle MS als Skript SK sowie die Implementierungen in konkreten Sprache sind hierbei nicht einschränkend zu verstehen. Für einen einschlägigen Fachmann ist offensichtlich, dass die erfindungsgemäßen Komponenten in beliebigen Sprachen und mit beliebigen Schnittstellen realisiert werden können.

```
          Datei "SamplePage" mit Webpage WP und Skript SK
```

```
<HTML>

<HEAD>
<META HTTP-EQUIV="Content-Type"
       content="text/html; charset=iso-8859-1">
<TITLE>Document Title</TITLE>
</HEAD>

<BODY>
<object name="PushApplet"
        code="PushApplet"
        codebase = "some_directory">
<param name="FiresScriptEvents" value="true">
<! COMMENT SID_DEF: Hier wird die Session-ID SID festgelegt>
<param name="SessionID" value="1234">
</object>

<! COMMENT TID_DEF: Hier wird die Tag-ID TID als "ID0" für
die nachfolgende Information festgelegt.>
<div id="ID0">
VALUE OF STOCK OPTION XY: USD 100.00
       (UPDATED AT 12.00, 01.01.2000)
</div>
```

```
<! COMMENT SK_DEF: Hier ist ein als JavaScript definiertes
Skript SK direkt in die HTML Datei SamplePage eingefügt.>
<! COMMENT EV_DEF: Innerhalb dieses SCRIPT Tags wird hierbei
das Event EV als "push(e)" definiert.>
<script
  language="JavaScript" for="PushApplet"
  event="push(e)">
document.all(e.getElement()).innerHTML = e.getValue();
</script>
</BODY>

</HTML>
```

```
                    Datei "PushApplet" mit Applet AL
```

```
// Class PushApplet (Extention of class Applet)
//
// public methods of class PushApplet:
// *01* void init()
// *02* void stop()
// *03* void run()

import java.util.*;
import java.applet.*;
import java.net.*;
import java.io.*;

public class PushApplet extends Applet implements Runnable {
  private transient Vector m_myEventsListeners;
  private Socket m_Socket = null;
  private String m_SessionID = null;

//*01*//
  public void init() {
    // save session id
    m_SessionID = getParameter("SessionID");
```

**EP 1 189 149 A1**

```
    // COMMENT Connect: Hier wird von dem Applet AP eine
    // Verbindung VB zum Server SV aufgebaut.
    // open connection to server
    String host = this.getCodeBase().getHost();
    try {
      m_Socket = new Socket(host,8000);
      System.out.println
        ("PushApplet: Connection to server established. ");
      (new Thread(this)).start();
    }
    catch (Exception e) {
      System.out.println
        ("PushApplet: Failure. " + e.getMessage());
    }
  }


//*02*//
  public void stop() {
    // exit immediately if no connection to server exists
    if (m_Socket == null) { return; }
    // terminate connection to server
    try {
      m_Socket.close();
      System.out.println
        ("PushApplet: Connection to server closed. ");
    }
    catch (Exception e) {
      System.out.println
        ("PushApplet: Failure. " + e.getMessage());
    }
  }


//*03*//
  public void run() {
    try {
      // COMMENT SID_SND: Hier wird die SID an der Server SV
      // übermittelt
```

7

```
// send session id
DataOutputStream out =
  new DataOutputStream(m_Socket.getOutputStream());
DataInputStream in =
  new DataInputStream(m_Socket.getInputStream());
out.writeUTF(m_SessionID);
out.flush();
System.out.println
  ("PushApplet: Session ID transmitted. ");
// COMMENT UD_LST: Hier werden vom Server SV gesendete
// Nachrichten UD empfangen
// receive updates
for (;;) {
  String element = in.readUTF();
  String value = in.readUTF();
  System.out.println
    ("PushApplet: Update Element "
    + element
    + " with value "
    + value);
  // COMMENT EV_SND: Hier wird die Nachricht EV
  // als Event push(e) an das Skript SK gesendet
  if (m_myEventsListeners != null) {
    PushServerEvent e =
      new PushServerEvent(this,element,value);
    // initiate update by triggering event(s)
    for ( int i = 0
        ; i < m_myEventsListeners.size()
        ; i++)
      ( (PushServerListener)
        m_myEventsListeners.elementAt(i)).push(e);
  }
 }
}
catch (Exception e) {
  System.out.println
    ("PushApplet: Failure. " + e.getMessage());
```

```
        }
      }
} // end of class PushApplet
```

```
                    Datei "PushServlet" mit Servlet SL


// Class PushServlet (Extention of class HttpServlet)
//
// public methods of class PushServlet:
// *11* void init(...)
// *12* void run()

import javax.servlet.*;
import javax.servlet.http.*;
import java.io.*;
import java.net.*;
import java.util.*;

public class PushServlet extends HttpServlet implements Run-
nable {
    ServerSocket m_ServerSocket = null;
    Hashtable m_ClientSockets = new Hashtable();

//*11*//
//Initialize global variables
    public void init(ServletConfig config)
    throws ServletException {
        super.init(config);
        try {
            m_ServerSocket = new ServerSocket(8000);
            (new Thread(this)).start();
        }
        catch (Exception e) {
            throw new ServletException
                ("Cannot create ServerSocket");
        }
```

```
        }


//*12*//
    public void run() {
        Socket socket = null;
        try {
            socket = m_ServerSocket.accept();
            // launch new handler thread
            (new Thread(this)).start();
            // read session id
            DataInputStream dataIn =
                new DataInputStream(socket.getInputStream());
            DataOutputStream dataOut =
                new DataOutputStream(socket.getOutputStream());
            String sessionID = dataIn.readUTF();
            // store socket
            m_ClientSockets.put(sessionID,socket);
            // transmit update to client
            try {
                // COMMENT TID_SND: Hier werden die Tag-ID TID
                // zur Identifikation des zu ändernden Bereichs
                // in der Webpage WP_{CL} eingefügt
                dataOut.writeUTF("ID0");
                // COMMENT INF_SND: Hier wird die aktualisierte
                // Information INF in die Nachricht UD eingefügt.
                dataOut.writeUTF("
                    VALUE OF STOCK OPTION XY: USD 123.45
                        (UPDATED AT 12.15, 01.01.2000)
                    ");
                // COMMENT UD_SND: Hier wird die Nachricht UD vom
                // Servlet SV an das Applet AP gesendet.
                dataOut.flush();
            }
            catch (Exception e) {
                // failure, terminate session
                m_ClientSockets.remove(sessionID);
                break;
```

```
                }
            }
            catch (Exception e) {
            }
        }
    } // end of class PushServlet
```

In diesem Ausführungsbeispiel wird davon ausgegangen, dass in dem Browser BR die Webpage WP mit dem zugeordneten Skript $SK_{CL}$, sowie das Applet $AL_{CL}$ bereits vorgesehen sind, dass zwischen dem Applet $AL_{CL}$ und dem Server SV bereits eine Verbindung VB besteht und dass die Webpage $WP_{CL}$ bereits von dem Browser BR dargestellt wird, d.h. dass folgende Information INF dargestellt wird:
> VALUE OF STOCK OPTION XY: USD 100.00
> > (UPDATED AT 12.00, 01.01.2000)

Eine Möglichkeit zur Bereitstellung der erfindungsgemäßen Komponenten Webpage WP, Skript SK und Applet AL im Browser BR besteht z.B. darin, dass - wie eingangs beschrieben - von dem Browser BR ein HTTP Request an den Server gesendet wird und von dem Server daraufhin mit einem HTTP Response die erfindungsgemäßen Komponenten Webpage WP, Skript SK und Applet AL an den Browser übermittelt werden. Dieses nicht erfindungswesentliche Verfahren ist in Figur 1 durch die Nachrichten 1: Request (WP) und 2: Response (WP, SK, AL) angedeutet.

Eine Möglichkeit zum Aufbau der Verbindung VB zwischen Browser BR und Server SV ist in der Initialisierungs-Methode init() (siehe *01* in der Codedatei PushApplet) des Applet AL dargestellt (siehe COMMENT Connect und Nachricht 3: Connect (SID) in Figur 1). Weiterhin wird in dieser Codedatei in der Ausführungs-Methode run() (siehe *03*) die Session-ID SID an den Server SV übermittelt (siehe COMMENT SID_SND). Die Session-ID ist hierbei in der Codedatei SamplePage definiert (siehe COMMENT SID_DEF).

Das erfindungsgemäße Modifikationsverfahren wird von dem Servlet SV in der Ausführungs-Methode run() (siehe *12* in der Codedatei PushServlet) durch das Aussenden der Nachricht UD initiiert (siehe COMMENT UD_SND und Nachricht 4: UD (TID, INF) in Figur 1). In diese Nachricht ist zumindest die aktualisierte Information INF eingefügt (siehe COMMENT INF_SND). Optional wird auch eine Tag-ID zur Kennzeichnung des zu ändernden Bereichs in die Nachricht UD eingefügt (siehe COMMENT TID_SND). Die Tag-ID ist hierbei in der Webpage WP definiert (siehe COMMENT TID_DEF in der Codedatei SamplePage). Diese erfindungsgemäße Verwendung einer Tag-ID TID ist optional und kann somit auch weggelassen werden.

Die gesendete Nachricht UD wird von dem Applet $AL_{CL}$ in der Ausführungsmethode run() (siehe *03* in der Codedatei PushApplet) empfangen (siehe COMMENT UD_LST). Die Tag-ID TID und die aktualisierte Information INF werden der Nachricht UD entnommen und als Nachricht EV dem Skript $SK_{CL}$ mitgeteilt (siehe EV_SND und Nachricht 5: EV (TID, INF) in Figur 1). Die Nachricht EV ist hierbei beispielsweise als Event EV ausgebildet, das in dem Skript $SK_{CL}$ als push(e) definiert ist (siehe COMMENT EV_DEF in der Codedatei SamplePage).

Das Event EV wird von dem Skript $SK_{CL}$, das in der Codedatei SamplePage definiert ist (siehe COMMENT SK_DEF), empfangen. Durch dieses Skript $SK_{CL}$ wird ein generisches Konzept realisiert, bei dem die bisher dargestellte Information INF, ggf. gekennzeichnet durch die Tag-ID TID, durch den aktualisierten Wert der Information INF ersetzt wird. Hierzu werden der Nachricht die Tag-ID TID und die aktualisierte Information INF entnommen und generisch - id=e.getElement() und value=e.getValue() - in ein dynamic HTML Kommando document.all (...) eingefügt. Von diesem wird hierauf unter Berücksichtigung der aktualisierten Information INF die durch das Tag-ID TID gekennzeichnete Information INF modifiziert (siehe auch Aktion 6: MOD (TID, INF) in Figur 1). Nach dieser Modifikation wird von dem Browser BR folgendes dargestellt:
> VALUE OF STOCK OPTION XY: USD 123.45
> > (UPDATED AT 12.15, 01.01.2000)

**Patentansprüche**

1. Verfahren zur Modifikation einer Webpage ($WP_{CL}$) in einem Client (CL), in dem die Webpage ($WP_{CL}$) mit zumindest einer zugeordneten Modifikationsschnittstelle ($MS_{CL}$), sowie zumindest ein Applet ($AL_{CL}$) vorgesehen sind, wobei zwischen dem Applet ($AL_{CL}$) und zumindest einem Server (SV) zumindest eine Verbindung (VB) besteht,

mit folgenden Schritten:

- von dem Server (SV) wird dem Applet ($AP_{CL}$) zumindest eine erste Nachricht (UD) mitgeteilt,
- vom dem Applet ($AP_{CL}$) wird hierauf der Modifikationsschnittstelle ($MS_{CL}$) zumindest eine zweite Nachricht (EV) mitgeteilt,
- die Webpage ($WP_{CL}$) wird unter Berücksichtigung der über die Modifikationsschnittstelle ($MS_{CL}$) empfangenen zweiten Nachricht (EV) modifiziert.

**2.** Verfahren nach Anspruch 1,
**dadurch gekennzeichnet,**
**dass** der Client (CL) als Browser (BR) ausgebildet ist, von dem die Webpage (WP) dargestellt wird.

**3.** Verfahren nach einem der Ansprüche 1 oder 2,
**dadurch gekennzeichnet**
**dass** die zweite Nachricht (EV) als Event ausgebildet ist.

**4.** Verfahren nach einem der Ansprüche 1 bis 3,
**dadurch gekennzeichnet**
**dass** die Modifikationsschnittstelle ($MS_{CL}$) als Skript (SK) ausgebildet ist.

**5.** Verfahren nach einem der vorstehenden Ansprüche,
**dadurch gekennzeichnet**
**dass** die Verbindung (VB) als TCP/IP-Verbindung ausgebildet ist.

**6.** Verfahren nach einem der vorstehenden Ansprüche,
**dadurch gekennzeichnet**
**dass** das Applet (AP) mit einer dem Server (SV) bekannten Session-ID (SID) **gekennzeichnet** wird.

**7.** Verfahren nach einem der vorstehenden Ansprüche,
**dadurch gekennzeichnet**
**dass** die Adresse (ADR) des Servers (SV) dem Applet (AP) als Parameter übergeben oder aus dem Programmcode des Applets (AP) bestimmt wird.

**8.** Verfahren nach einem der vorstehenden Ansprüche,
**dadurch gekennzeichnet**
**dass** bei einer Webpage (WP), in der zumindest ein modifizierbarer Bereich durch eine Tag-ID (TID) **gekennzeichnet** ist, in den beiden Nachrichten (UD, EV) zumindest die Tag-ID (TID) übermittelt wird, wenn lediglich der Bereich modifiziert werden soll.

**9.** Server (SV) nach einem der vorstehenden Ansprüche, mit:

- zumindest einem Servlet (SL) zur Mitteilung von Änderungen der Webpage (WP) an das Applet ($AL_{CL}$).

**10.** Client (CL) nach einem der vorstehenden Ansprüche, mit:

- der zumindest einem Webpage ($WP_{CL}$),
- dem zumindest einer, der Webpage ($WP_{CL}$) zugeordneten Modifikationsschnittstelle ($MS_{CL}$),
- dem zumindest einen der Webpage ($WP_{CL}$) zugeordneten Applet ($AL_{CL}$).

CL (BR)

SV (ADR)

6: MOD (TID, INF)

$WP_{CL}$ (TID)

- - - - - - - -

$MS_{SV}$ ($SK_{SV}$)

1: Request (WP)

$WP_{SV}$ (TID [,SID])

- - - - - - - -

$MS_{SV}$ ($SK_{SV}$)

SamplePage

2: Response (WP, MS (SK), AL)

5: EV (TID, INF)

$AL_{CL}$

3: Connect (SID)

$AL_{SV}$

PushApplet

VB (SID)

4: UD (TID, INF)

SL

PushServlet

## FIG 1

**Europäisches Patentamt**

## EUROPÄISCHER RECHERCHENBERICHT

Nummer der Anmeldung

EP 00 12 0487

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | WO 98 44695 A (APPLE COMPUTER) 8. Oktober 1998 (1998-10-08) * Seite 8, Zeile 2 – Seite 9, Zeile 10 * * Seite 14, Zeile 9 – Seite 16, Zeile 14 * * Seite 20, Zeile 4 – Seite 21, Zeile 23 * * Seite 22, Zeile 27 – Seite 24, Zeile 9 * * Seite 28, Zeile 13 – Seite 30, Zeile 27 * | 1-10 | G06F17/30 H04L29/06 |
| X | WO 00 43913 A (WIRED SOLUTIONS LLC ;PASQUALI SANDRO (US)) 27. Juli 2000 (2000-07-27) * Seite 6, Zeile 19 – Seite 8, Zeile 8 * * Seite 20, Zeile 15 – Seite 21, Zeile 17 * * Seite 56, Zeile 10 – Seite 57, Zeile 19 * * Ansprüche * * Abbildungen 5A,B * | 1-7,9,10 | |
| X | SWANSON S ET AL: "REAL-TIME STREAMING AND JAVA" OBJECT MAGAZINE,XX,XX, 1. Juli 1996 (1996-07-01), Seiten 36,38-39, XP000670859 ISSN: 1055-3614 * das ganze Dokument * | 1-3,5,9, 10 | **RECHERCHIERTE SACHGEBIETE (Int.Cl.7)** G06F H04L |
| A | WO 99 19783 A (TELIA AB) 22. April 1999 (1999-04-22) * das ganze Dokument * | 1,2,5,9, 10 | |
| A | US 5 922 044 A (BANTHIA PRAKASH C) 13. Juli 1999 (1999-07-13) * Zusammenfassung * * Spalte 2, Zeile 34 – Spalte 2, Zeile 62 * * Ansprüche * | 1,2,5,9, 10 | |

Der vorliegende Recherchenbericht wurde für alle Patentansprüche erstellt

| Recherchenort | Abschlußdatum der Recherche | Prüfer |
|---|---|---|
| DEN HAAG | 28. März 2001 | Abbing, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 00 12 0487

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-03-2001

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| WO | 9844695 | A | 08-10-1998 | EP | 0972386 | A | 19-01-2000 |
| WO | 0043913 | A | 27-07-2000 | AU | 3210400 | A | 07-08-2000 |
| WO | 9919783 | A | 22-04-1999 | EP | 1023654 | A | 02-08-2000 |
| | | | | NO | 20001858 | A | 14-06-2000 |
| | | | | SE | 9703757 | A | 16-04-1999 |
| US | 5922044 | A | 13-07-1999 | US | 6085243 | A | 04-07-2000 |
| | | | | WO | 9843170 | A | 01-10-1998 |
| | | | | AU | 5601198 | A | 03-07-1998 |
| | | | | EP | 0956680 | A | 17-11-1999 |
| | | | | GB | 2335124 | A | 08-09-1999 |
| | | | | WO | 9826541 | A | 18-06-1998 |
| | | | | US | 6009274 | A | 28-12-1999 |
| | | | | US | 6108782 | A | 22-08-2000 |

EPO FORM P0461

Für nähere Einzelheiten zu diesem Anhang : siehe Amtsblatt des Europäischen Patentamts, Nr.12/82